# EUROPEAN PATENT SPECIFICATION

(11) **EP 3 439 210 B1**
(45) Date of publication and mention of the grant of the patent: **25.12.2019**
(21) Application number: 17306024.5
(22) Date of filing: 31.07.2017
(51) Int. Cl.: H04L 1/00, H04L 12/54, H04L 12/721, H04L 12/741, H04L 12/803, H04L 12/805, H04L 12/841, H04L 12/931, H04L 12/935, H04L 12/947, H04L 29/06

(54) **RELIABLE CUT-THROUGH SWITCHING FOR IEEE 802.1 TIME SENSITIVE NETWORKING STANDARDS**
ZUVERLÄSSIGE DURCHSCHALTUNG FÜR IEEE 802.1-ZEITEMPFINDLICHE NETZWERKSTANDARDS
COMMUTATION À TRAVERSÉE TRANSPARENTE FIABLE POUR DES NORMES DE RÉSEAUX IEEE 802.1 SENSIBLES AU TEMPS

(43) Date of publication of application: 06.02.2019
(73) Proprietor: Mitsubishi Electric R&D Centre Europe B.V., 1119 NS Schiphol Rijk Amsterdam (NL); Mitsubishi Electric Corporation, Tokyo 100-8310 (JP)
(72) Inventor: MANGIN, Christophe, 35708 Rennes cedex7 (FR)
(74) Representative: Plasseraud IP

(56) References cited:
- US-A1- 2007 198 900
- US-A1- 2017 099 119

## Description

### Field of the Invention

This subject application relates to devices and methods for processing data packets including a data frame defined according to IEEE 802.1 Time Sensitive Networking standards. Similar methods and devices are known from patent application US2017099119 A1.

### Background of the Invention

Ethernet switches are characterized by the switching method that they support. Nowadays, two Ethernet switching paradigms are mainly used: store-and-forward and cut-through. While the store-and-forward switching method forwards a data packet only after it has received a whole data frame and checked its integrity, the cut-through switching method engages in the forwarding process soon after it has examined the destination MAC address of the data frame.

Hence, with store-and-forward switching method, error checking is performed and erroneous frames are discarded.

In contrast, with cut-through switching method, latency is reduced by eliminating error checking. In practice, packets with physical or data-link-layer errors are forwarded to other segments of the network. Then, at the receiving end, a host can invalidate the frame check sequence of the packet and drop the packet.

The situation created by the cut-through switching method is not acceptable since erroneous frames and error-free frames are forwarded to their destinations.

This is particularly problematic for packet switching networks which are based on IEEE 802.1 Time Sensitive Networking (TSN) standards. Indeed, such networks are designed for handling data streams in real-time control applications, such as industrial automation and automotive networks. As such, these networks require low latency and zero packet loss. However, in these networks, management of the data streams is exclusively performed using layer-2 information in the frame header of the data streams. Hence, when cut-through switching method is used, errors are to be expected.

Therefore, there is a need for a reliable cut-through switching method for packet switching networks, which are based on the IEEE 802.1 TSN standards.

### Summary of the Invention

The present subject application provides a network device and a method for processing at least one data packet including a data frame defined according to IEEE 802.1 Time Sensitive Networking standards, as described in the accompanying claims. The subject application also provides an Ethernet switch and a method for performing switching operations on at least one data frame of a data packet forwarded by the claimed network device and method thereof, as described in the accompanying claims.

### Brief Description of the Drawings

Further details, aspects and embodiments of the proposed solution will be described, by way of example only, with reference to the drawings. In the drawings, like or similar reference numbers are used to identify like or functionally similar elements. Elements in the figures are illustrated for simplicity and clarity and have not necessarily been drawn to scale.
FIG. 1 is an exemplary subsystem of an Ethernet-based communication system designed for in-vehicle communication.
FIG. 2a is a block diagram illustrating a data packet.
FIG. 2b is a block diagram illustrating an Ethernet data frame defined according to IEEE 802.1 Time Sensitive Networking standards.
FIG. 3a is a block diagram illustrating an Ethernet data frame defined in accordance with embodiments of the subject application.
FIG. 3b is a block diagram illustrating cut-through switching field in accordance with embodiments of the subject application.
FIG. 4 is a flow chart of a processing method in accordance with an embodiment of the subject application.
FIG. 5 is a flow chart of an Ethernet switching method in accordance with an embodiment of the subject application.

### Detailed Description of the preferred embodiments

The general context of the subject application relates to the use of the cut-through switching method in networks defined according to IEEE 802.1 Time Sensitive Networking (TSN) standards. Such standards define mechanisms enabling the end-to-end management of resource reservation of quality of service (QoS) guaranteed streams. These streams are particularly used in industrial or automotive networks where low latency and zero-loss is required.

It is known that an Ethernet switch controls the transmissions of data frames between switch ports connected to a communication network by using traffic forwarding rules. Traffic forwarding is based on an address learning mechanism which collects in a database, all the source media access control (MAC) addresses in all the data frames received by the Ethernet switch. Hence, the Ethernet switch can learn where to send future data frames destined to a given MAC address, by looking in the database, at the MAC address and the port number that the data frame came in on.

It is also known that a data frame belonging to a stream according to IEEE 802.1 TSN standards is solely identified by information located in the header of the data frame. However, IEEE 802.1 TSN standards do not require the source MAC address as part of these identification information of a stream. Indeed, Ethernet switches processing data frames defined according to IEEE 802.1 TSN standards use predefined traffic routes instead of the address learning mechanism.

Hence, it is proposed to use the source MAC address field of the header of the so defined data frames in order to include an error detection mechanism that provide coverage for the header of the data frames. Thereafter, cut-through switching method can be used by engaging in the forwarding process soon after the destination MAC address of the data frame has been examined and error detection on the header of the data frame is successful.

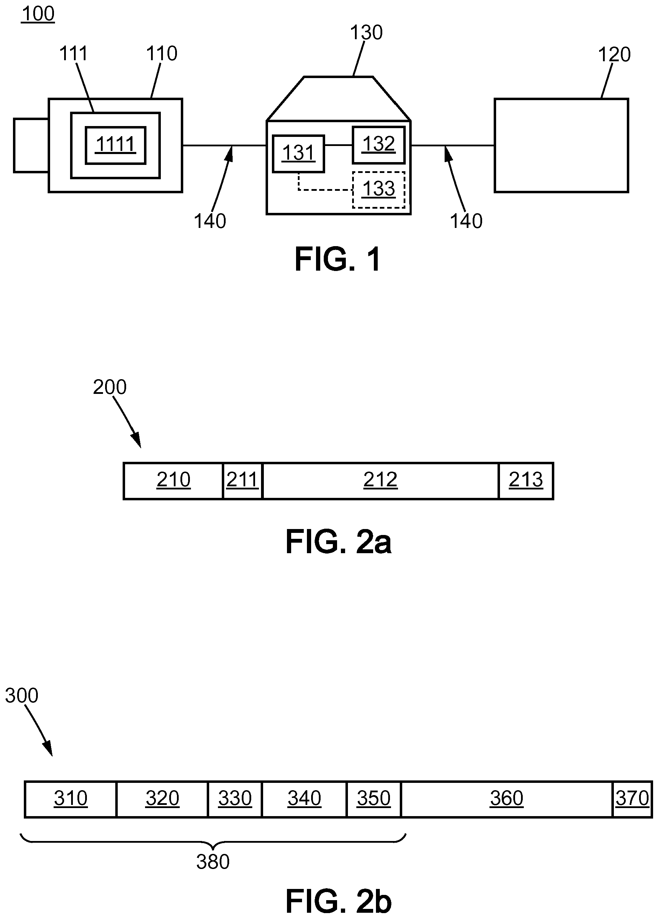

Figure 1 shows an exemplary subsystem of an Ethernet-based communication system 100 designed for in-vehicle communication. However, Ethernet-based communication system 100 is generally designed for time-sensitive networking communications for time-critical applications that are transported on non-cyclic rate-controlled and cyclic streams. Hence, for example, Ethernet-based communication system 100 may be an industrial automation communication system.

In figure 1, Ethernet-based communication system 100 comprises two nodes 110, 120, an Ethernet switch 130 and a communication network 140. However, in general, Ethernet-based communication system 100 comprises at least one node 110, 120 and at least one Ethernet switch 130.

Communication network 140 is configured for supporting data transfer between nodes 110, 120 via Ethernet switch 130. In the example of figure 1, communication network 140 uses a point-to-point topology. However, others topologies can be contemplated, such as star-based topology, daisy-chain-based topology or a combination of both topologies, for instance realized as a tree structure.

In the example of figure 1, node 110 is a conventional in-vehicle camera and node 120 is a conventional electronic control unit (ECU). As such, the arrangement of figure 1 may be part of a traffic sign recognition system in an automated or autonomous car. Hence, in operation, in-vehicle camera 110 transmits data frames to Ethernet switch 130 via communication network 140. Then, Ethernet switch 130 forwards the data frames to ECU 120 via communication network 140.

In accordance with the subject application, in-vehicle camera 110 comprises a network device 111 that is configured for processing data packets before being transmitted over communication network 140. Network device 111 may be implemented or deployed as a software or a hardware module of in-vehicle camera 110. In an example, network device 111 is a device driver, that is a software process that controls the hardware device transmitting data packets over communication network 140.

Figure 2a shows an exemplary data packet 200 which can be used with the proposed subject application. Data packet 200 starts with a preamble field 210 and a start frame delimiter field 211 which together help determine the beginning and end of data packet 200. Further, data packet 200 comprises a payload field 212 for carrying a data frame to be transmitted and an interframe gap field 213 for facilitating collision detection and avoidance between two data frames.

Returning to figure 1, each data packet processed by network device 111 includes a data frame defined according to IEEE 802.1 Time Sensitive Networking (TSN) standards. For further information concerning IEEE 802.1 TSN standards, one should refer to the latest published information available on the website of the The Time-Sensitive Networking Task Group (http://www.ieee802.org/1/pages/tsn.html) and on the website listing IEEE 802.1 standards (http://standards.ieee.org/about/get/802/802.1.html). For applications that do not handle or partially handle IEEE 802.1 TSN standards, one can use IEEE 802.1Qcc standard. Indeed, the latter defines a so-called stream transformation function which role is, at the edge of the network defined according to IEEE 802.1 TSN standards, to encapsulate the data frames of non-TSN stream in an Ethernet frame that can be further handled by TSN network elements in accordance with IEEE 802.1 TSN standards.

Figure 2b shows an exemplary Ethernet data frame 300 that can be included in packet 200. In the subject application, data frame 300 is defined in accordance with IEEE 802.1 TSN standards. As such, data frame 300 starts with a destination address field 310 and a source address field 320, which respectively, include a media access control (MAC) address of where data frame 300 is to be sent and the MAC address of the device that sent it. Further, data frame 300 comprises a virtual local area network (VLAN) tag field 330 defined according to IEEE 802.1Q standard and a redundancy tag field 340 defined according to IEEE 802.1CB standard. Still further, data frame 300 comprises an Ethertype field 350 followed by data field 360, the Ethertype field 350 including an information defining the type of data included in the data field 360 with respect to the higher layers. Finally, data frame 300 is terminated with a frame check sequence (FCS) field 370 for checking the integrity of data frame 300. In the foregoing description, a header portion 380 of a data frame such as data frame 300 comprises the destination address field 310, the source address field 320, the VLAN tag field 330, the redundancy tag field 340 and the Ethertype field 350.

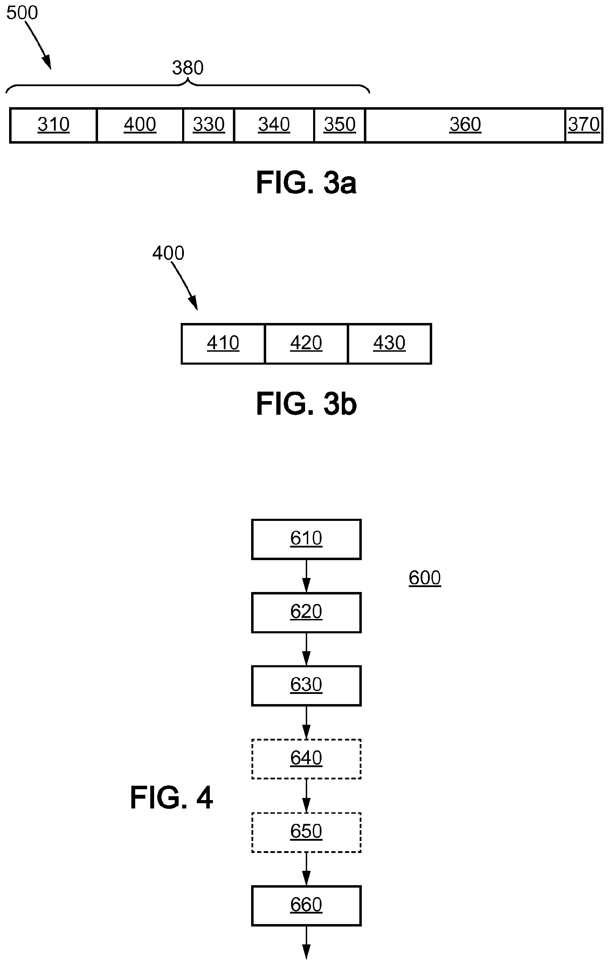

Returning to figure 1, network device 111 comprises a packet processor 1111. In operation, packet processor 1111 is configured for generating an altered version of data packet 200 by replacing the source address field 320 with a cut-through switching field of the same size. In an example, the source address field 320 is six bytes long and the cut-through switching field is also six bytes long. Figure 3a shows a data frame 500 corresponding to a modified version of data frame 300 and that can be included in data packet 200. As can be seen in figure 3a, data frame 500 comprises a cut-through switching field 400 instead of the source address field 320.

Figure 3b shows the content of the cut-through switching field 400 in accordance with the subject application. The exemplary cut-through switching field 400 of figure 3b comprises a cut-through reserved sub-field 410, a total packet length sub-filed 420 and a header check sequence sub-field 430. In an example, each of the cut-through reserved sub-field 410, the total packet length sub-filed 420 and the header check sequence sub-field 430 is two bytes long. However, in a particular embodiment, the cut-through switching field 400 comprises at least the header check sequence sub-field 430. In that case, the header check sequence sub-field 430 is six bytes long.

Still in operation, packet processor 1111 is further configured for calculating a checksum value of the header portion 380 of data frame 500, by excluding from the calculation, the header check sequence sub-field 430. In other words, packet processor 1111 determines a checksum value based on the destination address field 310, the cut-through reserved sub-field 410, the total packet length sub-filed 420, the VLAN tag field 330, the redundancy tag field 340 and the Ethertype field 350. However, in the above-mentioned particular embodiment, packet processor 1111 does not consider in the calculation, the cut-through reserved sub-field 410 and the total packet length sub-filed 420. Further, in operation, packet processor 1111 is configured for storing the checksum value in the header check sequence sub-field 430. Finally, in operation, packet processor 1111 is configured for forwarding to communication network 140, the altered version of data packet 200 comprising data frame 500.

In one embodiment, packet processor 1111 is configured for storing in the cut-through reserved sub-field 410, data information indicating whether the source address field 320 has been replaced by the cut-through switching field 400. In an example, packet processor 1111 disposes the cut-through reserved sub-field 410 at the start of the cut-through switching field 400 and sets the least significant bit of the first byte of the data information to a predetermined value indicating that the cut-through switching field 400 comprises a multicast MAC address. It is known that the least significant bit of the first byte of a multicast MAC address is the so-called I/G bit (individual/group bit). An I/G bit set to a "1" indicates that the address is a multicast or broadcast address. An I/G bit set to a "0" indicates that the address is a unicast address. Hence, for instance, by setting the I/G bit to a "1" in the cut-through reserved sub-field 410, this would indicate that the cut-through switching field 400 comprises a multicast address. However, it is known that a multicast address is supposed to be found only in the destination address field 310. Therefore, it is proposed that an Ethernet switch finding an I/G bit set to a "1", would consider that the source address field 320 has been replaced by the cut-through switching field 400.

In another embodiment, packet processor 1111 is configured for calculating a total packet length value indicating a physical length of data packet 200 on communication network 140. In other words, packet processor 1111 determines the total packet length value of data packet 200 based on the preamble field 210, the start frame delimiter field 211, data frame 500 and the interframe gap field 213. Further, packet processor 1111 is configured for storing the total packet length value in the total packet length sub-filed 420.

Returning to figure 1, Ethernet switch 130 comprises at least a frame processor 131 and a cut-through switching module 132.

Upon reception of data frame 500, frame processor 131 is configured for calculating a checksum value of the header portion 380, by excluding from the calculation, the header check sequence sub-field 430. In other words, frame processor 131 determines a checksum value based on the destination address field 310, the cut-through reserved sub-field 410, the total packet length sub-filed 420, the VLAN tag field 330, the redundancy tag field 340 and the Ethertype field 350. However, in the above-mentioned particular embodiment, frame processor 131 does not consider in the calculation, the cut-through reserved sub-field 410 and the total packet length sub-filed 420. In an example, the checksum value is a cyclic redundancy check value, such as a CRC-16-CCITT. Further, frame processor 131 is configured for comparing the calculated checksum value with the checksum value stored in the header check sequence sub-field 430. Finally, frame processor 131 is configured for forwarding data frame 500 to cut-through switching module 132 based on the comparison. In an example, frame processor 131 forwards data frame 500 to cut-through switching module 132 where the calculated checksum value is equal to the checksum value stored in the header check sequence sub-field 430. In contrast, frame processor 131 does not forward data frame 500 to cut-through switching module 132 where the calculated checksum value is not equal to the checksum value stored in the header check sequence sub-field 430.

In an embodiment, frame processor 131 further forwards data frame 500 to cut-through switching module 132 based on the data information comprised in the cut-through reserved sub-field 410. In an example of that embodiment, frame processor 131 is configured for identifying a start of the cut-through switching field 400 and also for processing the least significant bit of the first byte of the data information comprised in the cut-through reserved sub-field 410 so as to determine whether the cut-through switching field 400 comprises a multicast MAC address. For instance, frame processor 131 further forwards data frame 500 to cut-through switching module 132 where an I/G bit set to a "1" is found in the cut-through reserved sub-field 410. In contrast, frame processor 131 does not forward data frame 500 to cut-through switching module 132 where where an I/G bit set to a "0" is found in the cut-through reserved sub-field 410.

In operation, cut-through switching module 132 is configured for forwarding data frame 500 to its intended destination based on the header portion 380 of data frame 500, by excluding from the forwarding decision, the cut-through switching field 400.

In one embodiment, frame processor 131 is configured for providing traffic conditioning to data frame 500 based on the total packet length sub-field 420. In that case, traffic conditioning can be applied without having to completely store data frame 500. The fact that traffic conditioning takes into account the total packet length sub-field 420 allows for accurate rate-based scheduling and the handling of so-called jumbo frames. The term traffic conditioning relates to the metering, shaping, policing and/or remarking of traffic in order to ensure that traffic entering Ethernet switch 130 conforms to the predetermined traffic profiles. For instance, in a typical traffic policing application, a service provider defines a traffic profile to which a customer's traffic needs to conform. Network traffic that is classified into the profile is then passed, marked to a lower priority, dropped, and/or identified as exceeding a bandwidth limitation. In accordance with the subject application, the bandwidth limitation may be determined based on the total packet length sub-field 420. Some commonly used policing algorithms include single rate Three Color Marker (srTCM), two rate Three Color Marker (trTCM), and Metro Ethernet Forum (MEF) service policer. Additional policing algorithms include Frame Relay time-based, ATM leaky bucket, and vendor proprietary policing algorithms.

In another embodiment, frame processor 131 is configured for prioritizing the forwarding of data frame 500 based on IEEE 802.3br standard. In that case, data frame 500 is identified as an express frame.

Returning to figure 1, Ethernet switch 130 also comprises a store-and-forward module 133.

In an embodiment, frame processor 131 forwards the data frame 500 to store-and-forward module 133 based on the data information comprised in the cut-through reserved sub-field 410. In an example of that embodiment, frame processor 131 forwards data frame 500 to store-and-forward module 133 where data frame 500 is not forwarded to cut-through switching module 132.

In operation, store-and-forward module 133 is configured for forwarding data frame 500 to its intended destination, by excluding from the forwarding decision, the cut-through switching field 400.

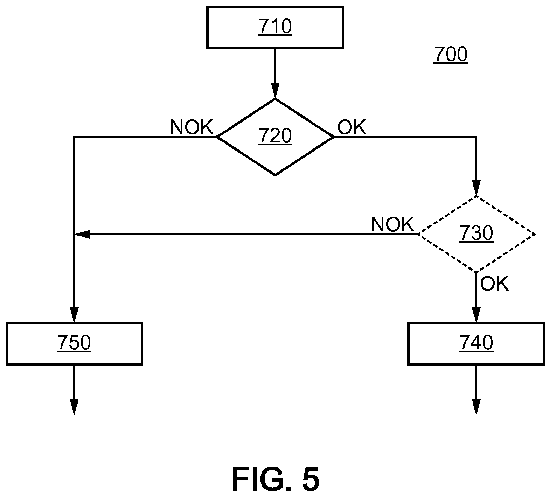

For a better understanding of the present subject application, reference will now be to the figures 4 and 5 showing embodiments of the proposed solution implemented methods.

Figure 4 illustrates a processing method 600 for altering data packet 200 so as to comprise data frame 500 instead of of data frame 300, as already explained above. The processing method 600 may include,
- at 610, generating the cut-through switching field 400 with the same size as the source address field 320,
- at 620, replacing the source address field 320 with the cut-through switching field 400, thereby generating an altered version of data packet 200,
- at 630, calculating a checksum value of the header portion 380 of data frame 500, by excluding from the calculation, the header check sequence sub-field 430. Then, storing the calculated checksum value in the header check sequence sub-field 430,
- optionally, at 640, storing in the cut-through reserved sub-field, data information indicating whether the source address field 320 has been replaced by the cut-through switching field 410,
- optionally, at 650, calculating a total packet length value indicating a physical length of data packet 200 on communication network 140. Then, storing the calculated total packet length value in the total packet length sub-field 420, and
- at 660, forwarding the altered version of data packet 200 to communication network 140.

In embodiments of the processing method 600, at 640, it is further included,
- disposing the cut-through reserved sub-field 410 at the start of the cut-through switching field 400, and
- setting the least significant bit of the first byte of the data information to a predetermined value indicating that the cut-through switching field 400 comprises a multicast MAC address.

Figure 5 illustrates an Ethernet switching method 700 for performing switching operations on data frame 500. The Ethernet switching method 700 may include,
- at 710, calculating a checksum value of the header portion 380, by excluding from the calculation, the header check sequence sub-field 430,
- at 720, comparing the calculated checksum value with the checksum value stored in the header check sequence sub-field 430. Then, proceeding to 740 or optionally to 730, if the calculated checksum value is equal to the checksum value stored in the header check sequence sub-field 430. Otherwise, optionally proceeding to 750 if the calculated checksum value is not equal to the checksum value stored in the header check sequence sub-field 430,
- optionally, at 730, checking a data information of the a cut-through reserved sub-field 410 so as to determine whether the source address field 320 has been replaced by the cut-through switching field 410. Then, proceeding to 740 if the data information indicates that the source address field 320 has been replaced by the cut-through switching field 410. Otherwise, optionally proceeding to 750 if the data information does not indicate that the source address field 320 has been replaced by the cut-through switching field 410,
- at 740, forwarding data frame 500 to a cut-through switching module configured for forwarding data frame 500 to its intended destination based on the header portion 380 of data frame 500, by excluding from the forwarding decision, the cut-through switching field 400,
- optionally, at 750, forwarding data frame 500 to a store-and-forward module configured for forwarding data frame 500 to its intended destination by excluding from the forwarding decision the cut-through switching field 400.

In embodiments of the processing method 700, at 730, it is further included,
- identifying a start of the cut-through switching field 400, and
- processing the least significant bit of the first byte of the data information comprised in the cut-through reserved sub-field 410 so as to determine whether the cut-through switching field 400 comprises a multicast MAC address.

In one embodiment of the processing method 700, it is further included, providing traffic conditioning to data frame 500 based on the total packet length sub-field 420.

In another embodiment of the processing method 700, it is further included, prioritizing the forwarding of data frame 500 based on IEEE 802.3br standard, wherein data frame 500 is identified as an express frame.

The above-proposed methods may also be performed by a computer program embodied in a non-transitory computer readable storage medium. Hence, it is also claimed a computer program product comprising instructions that can be executed by a computer system in order to carry out the above-proposed methods.

In the foregoing specification, the proposed solution has been described regarding specific examples of embodiments of the proposed solution. It will, however, be evident that various modifications and changes may be made therein without departing from the broader scope of the proposed solution as set forth in the appended claims.

## Claims

1. A network device (111) for processing at least one data packet (200) including a data frame (300) configured for time-sensitive transmission over a communication network (140), the data frame comprising a header portion (380) including a destination address field (310) in which a destination address is stored and a source address field (320) in which a source address is stored, the network device comprising:
- a packet processor (1111) for
- generating an altered version of a data packet by replacing the source address field with a cut-through switching field (400) of the same size, the cut-through switching field including at least a header check sequence sub-field (430),
- calculating a checksum value of the header portion, by excluding from the calculation, the header check sequence sub-field,
- storing the checksum value in the header check sequence sub-field, and
- forwarding the altered version of the data packet to the communication network.

2. The network device of claim 1, wherein the packet processor is further configured for:
- inserting a cut-through reserved sub-field (410) into the cut-through switching field, the cut-through reserved sub-field comprising data information indicating whether the source address field has been replaced by the cut-through switching field.

3. The network device of claims 1 or 2, wherein the packet processor is further configured for:
- calculating a total packet length value indicating a physical length of the data packet on the communication network,
- inserting a total packet length sub-field (420) into the cut-through switching field, the total packet length sub-field comprising the total packet length value.

4. An Ethernet switch (130) for performing switching operations on at least one data frame (500) of a data packet forwarded by a network device as claimed in claims 1 to 3, the Ethernet switch comprising a frame processor (131) and a cut-through switching module (132),
- the frame processor being configured for, upon reception of an header portion (380) of the data frame,
- calculating a checksum value of the header portion, by excluding from the calculation, the header check sequence sub-field (430),
- comparing the calculated checksum value with the checksum value stored in the header check sequence sub-field, and
- forwarding the data frame to the cut-through switching module conditioned on the comparison,
- the cut-through switching module being configured for forwarding the data frame to a destination address based on the header portion of the data frame, by excluding from the forwarding decision, the cut-through switching field.

5. The Ethernet switch of claim 4, wherein the frame processor is further configured for forwarding the data frame to the cut-through switching module conditioned on the data information comprised in the cut-through reserved sub-field (410).

6. The Ethernet switch of claims 4 or 5, wherein the frame processor is further configured for providing traffic conditioning to the data frame based on the total packet length sub-field (420).

7. The Ethernet switch of claims 4, 5 or 6 further comprising a store-and-forward module (133), wherein the frame processor is further configured for forwarding the data frame to the store-and-forward module where the frame processor does not forward the data frame to the cut-through switching module, the store-and-forward module being configured for forwarding the data frame to its intended destination, by excluding from the forwarding decision the cut-through switching field.

8. An Ethernet-based communication system comprising,
- a communication network (140),
- at least one network device (111) as claimed in claims 1 to 3, and
- at least one Ethernet switch (130) as claimed in claims 4 to 7,
wherein the network device and the Ethernet switch are operably coupled via a communication network.

9. A method (600) for processing at least one data packet including a data frame configured for time-sensitive transmission over a communication network (140), the data frame comprising a header portion including a destination address field (310) in which a destination address is stored and a source address field (320) in which a source address is stored, the method comprising:
- generating an altered version of a data packet by replacing the source address field with a cut-through switching field (400) of the same size, the cut-through switching field including at least a header check sequence sub-field (430),
- calculating a checksum value of the header portion, by excluding from the calculation, the header check sequence sub-field,
- storing the checksum value in the header check sequence sub-field, and
- forwarding the altered version of the data packet to the communication network.

10. The processing method of claim 9, wherein the packet processor is further configured for:
- inserting a cut-through reserved sub-field into the cut-through switching field, the cut-through reserved sub-field comprising data information indicating whether the source address field has been replaced by the cut-through switching field.

11. The processing method of claims 9 or 10, wherein the packet processor is further configured for:
- calculating a total packet length value indicating a physical length of the data packet on the communication network,
- inserting a total packet length sub-field into the cut-through switching field, the total packet length sub-field comprising the total packet length value.

12. A method (700) of performing Ethernet switching on at least one data frame (500) of a data packet forwarded by a processing method as claimed in claims 9 to 11, the Ethernet switching method comprising, upon reception of an header portion (380) of the data frame,
- calculating a checksum value of the header portion, by excluding from the calculation, the header check sequence sub-field,
- comparing the calculated checksum value with the checksum value stored in the header check sequence sub-field (430), and
- conditioned on the comparison, forwarding the data frame to a cut-through switching module configured for forwarding the data frame to a destination address based on the header portion of the data frame, by excluding from the forwarding decision, the cut-through switching field.

13. The Ethernet switching method of claim 12, further comprising, forwarding the data frame to a cut-through switching module conditioned on the data information comprised in the cut-through reserved sub-field.

14. The Ethernet switching method of claims 12 or 13 further comprising, providing traffic conditioning to the data frame based on the total packet length sub-field.

15. The Ethernet switching method of claims 12, 13 or 14 further comprising, where the data frame is not forwarded to the cut-through switching module, forwarding the data frame to a store-and-forward module configured for forwarding the data frame to its intended destination by excluding from the forwarding decision the cut-through switching field.

## Patentansprüche

1. Netzwerkvorrichtung (111) zum Verarbeiten wenigstens eines Datenpakets (200), welches einen Datenrahmen (300) umfasst, welcher für eine Zeit-sensitive Übertragung über ein Kommunikationsnetzwerk (140) eingerichtet ist, wobei der Datenrahmen einen Kopfabschnitt (380) umfasst, welcher ein Ziel-Adressfeld (310), in welchem eine Zieladresse gespeichert ist, und ein Quell-Adressfeld (320) umfasst, in welchem eine Quelladresse gespeichert ist, wobei die Netzwerkvorrichtung umfasst:
- einen Paket-Prozessor (1111) zum
- Erzeugen einer veränderten Version eines Datenpakets durch Ersetzen des Quell-Adressfelds mit einem Durchschnitt-Schaltfeld (400) der gleichen Größe, wobei das Durchschnitt-Schaltfeld wenigstens ein Kopf-Überprüfung-Abfolge-Unterfeld (430) umfasst,
- Berechnen eines Prüfsummenwerts des Kopfabschnitts durch Ausschließen von der Berechnung des Kopf-Überprüfung-Abfolge-Unterfelds,
- Speichern des Prüfsummenwerts in dem Kopf-Überprüfung-Abfolge-Unterfeld, und
- Weiterleiten der geänderten Version des Datenpakets an das Kommunikationsnetzwerk.

2. Netzwerkvorrichtung nach Anspruch 1, wobei der Paket-Prozessor ferner eingerichtet ist zum:
- Einsetzen eines reservierten Durchschnitt-Unterfelds (410) in das Durchschnitt-Schaltfeld, wobei das reservierte Durchschnitt-Unterfeld Dateninformationen umfasst, welche anzeigen, ob das Quell-Adressfeld durch das Durchschnitt-Schaltfeld ersetzt worden ist.

3. Netzwerkvorrichtung nach Anspruch 1 oder 2, wobei der Paket-Prozessor ferner eingerichtet ist zum:
- Berechnen eines gesamten Paketlängenwerts, welcher eine physikalische Länge des Datenpakets an dem Kommunikationsnetzwerk anzeigt,
- Einsetzen eines gesamten Paketlänge-Unterfelds (420) in das Durchschnitt-Schaltfeld, wobei das Gesamtpaketlänge-Unterfeld den gesamten Paketlängenwert umfasst.

4. Ethernet-Switch (130) zum Durchführen von Schaltoperationen an wenigstens einem Datenrahmen (500) eines Datenpakets, welches durch eine Netzwerkvorrichtung, wie in Ansprüchen 1 bis 3 beansprucht, weitergeleitet wird, wobei der Ethernet-Switch einen Rahmen-Prozessor (131) und ein Durchschnitt-Schaltmodul (132) umfasst,
- wobei der Rahmen-Prozessor auf einen Empfang eines Kopfabschnitts (380) des Datenrahmens hin eingerichtet ist zum,
- Berechnen eines Prüfsummenwerts des Kopfabschnitts durch Ausschließen von der Berechnung des Kopf-Überprüfung-Abfolge-Unterfelds,
- Vergleichen des berechneten Prüfsummenwerts mit dem Prüfsummenwert, welcher in dem Kopf-Überprüfung-Abfolge-Unterfeld gespeichert ist, und
- Weiterleiten des Datenrahmens an das Durchschnitt-Schaltmodul, welches auf den Vergleich eingestellt ist,
- wobei das Durchschnitt-Schaltmodul zum Weiterleiten des Datenrahmens an eine Zieladresse auf Grundlage des Kopfabschnitts des Datenrahmens durch Ausschließen des Durchschnitt-Schaltfelds von der Weiterleitungsentscheidung eingerichtet ist.

5. Ethernet-Switch nach Anspruch 4, wobei der Rahmen-Prozessor ferner zum Weiterleiten des Datenrahmens an das Durchschnitt-Schaltmodul eingerichtet ist, welches auf die Dateninformationen eingestellt ist, welche in dem reservierten Durchschnitt-Unterfeld (410) umfasst sind.

6. Ethernet-Switch nach Ansprüchen 4 oder 5, wobei der Rahmen-Prozessor ferner zum Bereitstellen von Verkehrseinstellungen auf den Datenrahmen auf Grundlage des gesamten Paketlängen-Unterfelds (420).

7. Ethernet-Switch nach Ansprüchen 4, 5 oder 6, ferner umfassend ein Modul zum Speichern und Weiterleiten (133), wobei der Rahmen-Prozessor ferner zum Weiterleiten des Datenrahmens an das Modul zum Speichern und Weiterleiten eingerichtet ist, wobei der Rahmen-Prozessor den Datenrahmen nicht an das Durchschnitt-Schaltmodul weiterleitet, wobei das Modul zum Speichern und Weiterleiten zum Weiterleiten des Datenrahmens an sein bestimmtes Ziel durch Ausschließen des Durchschnitt-Schaltfelds von der Weiterleitungsentscheidung eingerichtet ist.

8. Ethernet-basiertes Kommunikationssystem, umfassend,
- ein Kommunikationsnetzwerk (140),
- wenigstens eine Netzwerkvorrichtung (111), wie in Ansprüchen 1 bis 3 beansprucht, und
- wenigstens einen Ethernet-Switch (130), wie in Ansprüchen 4 bis 7 beansprucht,
wobei die Netzwerkvorrichtung und der Ethernet-Switch über ein Kommunikationsnetzwerk betriebsmäßig gekoppelt sind.

9. Verfahren (600) zum Verarbeiten wenigstens eines Datenpakets, welches einen Datenrahmen umfasst, welcher für eine Zeit-sensitive Übertragung über ein Kommunikationsnetzwerk (140) eingerichtet ist, wobei der Datenrahmen einen Kopfabschnitt umfasst, welcher ein Ziel-Adressfeld (310), in welchem eine Zieladresse gespeichert ist, und ein Quell-Adressfeld (320) umfasst, in welchem eine Quelladresse gespeichert ist, wobei das Verfahren umfasst:
- Erzeugen einer veränderten Version eines Datenpakets durch Ersetzen des Quell-Adressfelds mit einem Durchschnitt-Schaltfeld (400) der gleichen Größe, wobei das Durchschnitt-Schaltfeld wenigstens ein Kopf-Überprüfung-Abfolge-Unterfeld (430) umfasst,
- Berechnen eines Prüfsummenwerts des Kopfabschnitts durch Ausschließen von der Berechnung des Kopf-Überprüfung-Abfolge-Unterfelds,
- Speichern des Prüfsummenwerts in dem Kopf-Überprüfung-Abfolge-Unterfeld, und
- Weiterleiten der geänderten Version des Datenpakets an das Kommunikationsnetzwerk.

10. Verarbeitungsverfahren nach Anspruch 9, wobei der Paket-Prozessor ferner eingerichtet ist zum:
- Einsetzen eines reservierten Durchschnitt-Unterfelds in das Durchschnitt-Schaltfeld, wobei das reservierte Durchschnitt-Unterfeld Dateninformationen umfasst, welche anzeigen, ob das Quell-Adressfeld durch das Durchschnitt-Schaltfeld ersetzt worden ist.

11. Verarbeitungsverfahren nach Ansprüchen 9 oder 10, wobei der Paket-Prozessor ferner eingerichtet ist zum:
- Berechnen eines gesamten Paketlängenwerts, welcher eine physikalische Länge des Datenpakets an dem Kommunikationsnetzwerk anzeigt,
- Einsetzen eines gesamten Paketlänge-Unterfelds in das Durchschnitt-Schaltfeld, wobei das Gesamtpaketlänge-Unterfeld den gesamten Paketlängenwert umfasst.

12. Verfahren (700) zum Durchführen eines Ethernet-Schaltens an wenigstens einem Datenrahmen (500) eines Datenpakets, welches durch ein Verarbeitungsverfahren, wie in Ansprüchen 9 bis 11 beansprucht, weitergeleitet wird, wobei das Ethernet-Schaltverfahren auf einen Empfang eines Kopfabschnitts (380) des Datenrahmens hin umfasst,
- Berechnen eines Prüfsummenwerts des Kopfabschnitts durch Ausschließen von der Berechnung des Kopf-Überprüfung-Abfolge-Unterfelds,
- Vergleichen des berechneten Prüfsummenwerts mit dem Prüfsummenwert, welcher in dem Kopf-Überprüfung-Abfolge-Unterfeld gespeichert ist, und
- eingestellt auf den Vergleich, Weiterleiten des Datenrahmens an das Durchschnitt-Schaltmodul, welches zum Weiterleiten des Datenrahmens an eine Zieladresse auf Grundlage des Kopfabschnitts des Datenrahmens durch Ausschließen des Durchschnitt-Schaltfelds von der Weiterleitungsentscheidung eingerichtet ist.

13. Ethernet-Schaltverfahren nach Anspruch 12, ferner umfassend ein Weiterleiten des Datenrahmens an das Durchschnitt-Schaltmodul, welches auf die Dateninformationen eingestellt ist, welche in dem reservierten Durchschnitt-Unterfeld umfasst sind.

14. Ethernet-Schaltverfahren nach Ansprüchen 12 oder 13 ferner umfassend ein Bereitstellen von Verkehrseinstellungen auf den Datenrahmen auf Grundlage des gesamten Paketlängen-Unterfelds.

15. Ethernet-Schaltverfahren nach Ansprüchen 12, 13 oder 14, ferner umfassend, wobei der Datenrahmen nicht an das Durchschnitt-Schaltmodul weitergeleitet wird, ein Weiterleiten des Datenrahmens an das Modul zum Speichern und Weiterleiten, welches zum Weiterleiten des Datenrahmens an sein bestimmtes Ziel durch Ausschließen des Durchschnitt-Schaltfelds von der Weiterleitungsentscheidung eingerichtet ist.

## Revendications

1. Dispositif de réseau (111) pour traiter au moins un paquet de données (200) comportant une trame de données (300) configurée pour une transmission sensible au temps sur un réseau de communication (140), la trame de données comprenant une partie d'en-tête (380) comportant un champ d'adresse destination (310) dans lequel une adresse destination est stockée et un champ d'adresse source (320) dans lequel une adresse source est stockée, le dispositif de réseau comprenant :
- un processeur de paquets (1111) pour
- la génération d'une version modifiée d'un paquet de données en remplaçant le champ d'adresse source par un champ de commutation en mode direct (400) de la même taille, le champ de commutation en mode direct comportant au moins un sous-champ de séquence de contrôle d'en-tête (430),
- le calcul d'une valeur de somme de contrôle de la partie d'en-tête, en excluant du calcul le sous-champ de séquence de contrôle d'en-tête,
- le stockage de la valeur de somme de contrôle dans le sous-champ de séquence de contrôle d'en-tête, et
- le transfert de la version modifiée du paquet de données au réseau de communication.

2. Dispositif de réseau selon la revendication 1, dans lequel le processeur de paquets est en outre configuré pour :
- l'insertion d'un sous-champ réservé au mode direct (410) dans le champ de commutation en mode direct, le sous-champ réservé au mode direct comprenant des informations de données indiquant si le champ d'adresse source a été remplacé par le champ de commutation en mode direct.

3. Dispositif de réseau selon la revendication 1 ou 2, dans lequel le processeur de paquets est en outre configuré pour :
- le calcul d'une valeur de longueur de paquet totale indiquant une longueur physique du paquet de données sur le réseau de communication,
- l'insertion d'un sous-champ de longueur de paquet totale (420) dans le champ de commutation en mode direct, le sous-champ de longueur de paquet totale comprenant la valeur de longueur de paquet totale.

4. Commutateur Ethernet (130) pour réaliser des opérations de commutation sur au moins une trame de données (500) d'un paquet de données transféré par un dispositif de réseau selon les revendications 1 à 3, le commutateur Ethernet comprenant un processeur de trame (131) et un module de commutation en mode direct (132),
- le processeur de trame étant configuré pour, lors de la réception d'une partie d'entête (380) de la trame de données,
- le calcul d'une valeur de somme de contrôle de la partie d'en-tête, en excluant du calcul le sous-champ de séquence de contrôle d'en-tête (430),
- la comparaison de la valeur de somme de contrôle calculée avec la valeur de somme de contrôle stockée dans le sous-champ de séquence de contrôle d'en-tête, et
- le transfert de la trame de données au module de commutation en mode direct conditionné par la comparaison,
- le module de commutation en mode direct étant configuré pour transférer la trame de données à une adresse destination sur la base de la partie d'en-tête de la trame de données, en excluant de la décision de transfert le champ de commutation en mode direct.

5. Commutateur Ethernet selon la revendication 4, dans lequel le processeur de trame est en outre configuré pour le transfert de la trame de données au module de commutation en mode direct conditionné par les informations de données comprises dans le sous-champ réservé au mode direct (410).

6. Commutateur Ethernet selon les revendications 4 ou 5, dans lequel le processeur de trame est en outre configuré pour fournir un conditionnement de trafic à la trame de données sur la base du sous-champ de longueur de paquet totale (420).

7. Commutateur Ethernet selon les revendications 4, 5 ou 6, comprenant en outre un module de stockage et de transfert (133), dans lequel le processeur de trame est en outre configuré pour transférer la trame de données au module de stockage et de transfert où le processeur de trame ne transfère pas la trame de données au module de commutation en mode direct, le module de stockage et de transfert étant configuré pour transférer la trame de données à sa destination prévue, en excluant de la décision de transfert le champ de commutation en mode direct.

8. Système de communication basé sur Ethernet comprenant,
- un réseau de communication (140),
- au moins un dispositif de réseau (111) selon les revendications 1 à 3, et
- au moins un commutateur Ethernet (130) selon les revendications 4 à 7,
dans lequel le dispositif de réseau et le commutateur Ethernet sont couplés de manière fonctionnelle via un réseau de communication.

9. Procédé (600) de traitement d'au moins un paquet de données comportant une trame de données configurée pour une transmission sensible au temps sur un réseau de communication (140), la trame de données comprenant une partie d'en-tête comportant un champ d'adresse destination (310) dans lequel une adresse destination est stockée et un champ d'adresse source (320) dans lequel une adresse source est stockée, le procédé comprenant :
- la génération d'une version modifiée d'un paquet de données en remplaçant le champ d'adresse source par un champ de commutation en mode direct (400) de la même taille, le champ de commutation en mode direct comportant au moins un sous-champ de séquence de contrôle d'en-tête (430),
- le calcul d'une valeur de somme de contrôle de la partie d'en-tête, en excluant du calcul le sous-champ de séquence de contrôle d'en-tête,
- le stockage de la valeur de somme de contrôle dans le sous-champ de séquence de contrôle d'en-tête, et
- le transfert de la version modifiée du paquet de données au réseau de communication.

10. Procédé de traitement selon la revendication 9, dans lequel le processeur de paquets est en outre configuré pour :
- l'insertion d'un sous-champ réservé au mode direct dans le champ de commutation en mode direct, le sous-champ réservé au mode direct comprenant des informations de données indiquant si le champ d'adresse source a été remplacé par le champ de commutation en mode direct.

11. Procédé de traitement selon les revendications 9 ou 10, dans lequel le processeur de paquets est en outre configuré pour :
- le calcul d'une valeur de longueur de paquet totale indiquant une longueur physique du paquet de données sur le réseau de communication,
- l'insertion d'un sous-champ de longueur de paquet totale dans le champ de commutation en mode direct, le sous-champ de longueur de paquet totale comprenant la valeur de longueur de paquet totale.

12. Procédé (700) pour réaliser la commutation Ethernet sur au moins une trame de données (500) d'un paquet de données transféré par un procédé de traitement selon les revendications 9 à 11, le procédé de commutation Ethernet comprenant, lors de la réception d'une partie d'en-tête (380) de la trame de données,
- le calcul d'une valeur de somme de contrôle de la partie d'en-tête, en excluant du calcul le sous-champ de séquence de contrôle d'en-tête,
- la comparaison de la valeur de somme de contrôle calculée avec la valeur de somme de contrôle stockée dans le sous-champ de séquence de contrôle d'en-tête (430), et
- conditionné par la comparaison, le transfert de la trame de données à un module de commutation en mode direct configuré pour transférer les données de trame à une adresse destination sur la base de la partie d'en-tête de la trame de données, en excluant de la décision de transfert le champ de commutation en mode direct.

13. Procédé de commutation Ethernet selon la revendication 12, comprenant en outre le transfert de la trame de données à un module de commutation en mode direct conditionné par les informations de données comprises dans le sous-champ réservé au mode direct.

14. Procédé de commutation Ethernet selon les revendications 12 ou 13, comprenant en outre, la fourniture d'un conditionnement de trafic à la trame de données sur la base du sous-champ de longueur de paquet totale.

15. Procédé de commutation Ethernet selon les revendications 12, 13 ou 14, comprenant en outre, si la trame de données n'est pas transférée au module de commutation en mode direct, le transfert de la trame de données à un module de stockage et de transfert configuré pour transférer la trame de données à sa destination prévue en excluant de la décision de transfert le champ de commutation en mode direct.
